# EUROPEAN PATENT SPECIFICATION

(11) **EP 0 465 159 B1**
(45) Date of publication and mention of the grant of the patent: **03.09.1997**
(21) Application number: 91305881.4
(22) Date of filing: 28.06.1991
(51) Int. Cl.: G11B 20/10, G11B 20/02

(54) **Data recording apparatus**
Datenaufzeichnungsgerät
Appareil d'enregistrement de données

(30) Priority: 30.06.1990 JP 174225/90
(43) Date of publication of application: 08.01.1992
(73) Proprietor: SONY CORPORATION, Tokyo 141 (JP)
(72) Inventor: Yoshida, Teruyuki, c/o Patents Division, Shinagawa-ku, Tokyo 141 (JP); Kanetsuka, Keiko, c/o Patents Division, Shinagawa-ku, Tokyo 141 (JP); Arai, Hideki, c/o Patents Division, Shinagawa-ku, Tokyo 141 (JP)
(74) Representative: Cotter, Ivan John

(56) References cited:
- DE-A- 3 800 827
- PATENT ABSTRACTS OF JAPAN vol. 12, no. 473 (P-799)(3320) 12 December 1988 & JP-A-63 191 374
- PATENT ABSTRACTS OF JAPAN vol. 14, no. 267 (P-1058)(4210) 8 June 1990 & JP-A-27 3 567
- PATENT ABSTRACTS OF JAPAN vol. 10, no. 19 (P-423)(2076) 24 January 1986 & JP-A-60 171 661
- PATENT ABSTRACTS OF JAPAN vol. 11, no. 100 (P-561)(2547) 28 March 1987 & JP-A-61 250 873

## Description

The invention relates to data recording apparatus for recording information data with different data rates.

Heretofore, there has been provided a data recording system which is capable of high density recording of information data by the use of the helical scanning digital video tape recorder.

The limit in recording speed of such a data recording system depends on the limit of the high frequency band of the recording system which includes a record amplification circuit, a rotary transformer and a rotary head.

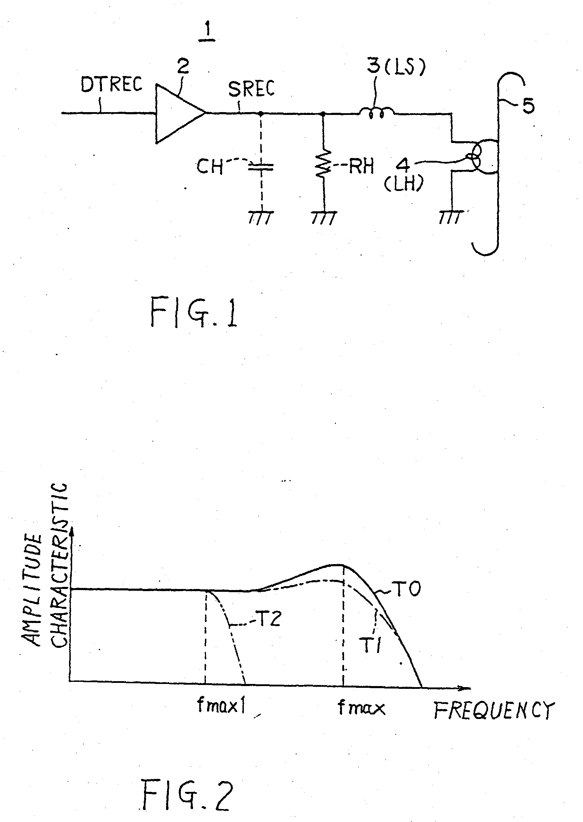

The recording unit of the data recording system is represented by the equivalent circuit illustrated in Figure 1.

More specifically, in this data recording system 1, information data DTREC which is being sent at a predetermined transmission rate (hereinafter referred to as the data rate) is amplified in the record amplification circuit 2, and the resulting record signals SREC are fed to a magnetic head 4 through a rotary transformer 3, so that the information data DTREC is recorded on a magnetic tape 5.

The inductance LS of the rotary transformer 3 represents a loss due to the rotary transformer, and the inductance LH of the magnetic head 4 represents a combined inductance of the rotary transformer 3 and the magnetic head 4. As shown by the characteristic curve in Figure 2, the maximum frequency fmax of the record signals SREC can be recorded by such a construction.

In such a case, on the output side of the record amplification circuit 2, there occurs a capacitance CH which is given by combining together the output capacitance of the record amplification circuit 2 and the distributed capacitance of the circuits, the leads, the rotary transformer 3, etc.

Consequently, in the data recording system 1, the capacitance CH and the inductance LS and LH of the rotary transformer 3 and the head 4 produce a resonance circuit, and a rise in the frequency characteristic T0 (shown by the solid line in Figure 2) is thus generated in the amplitude characteristic in the vicinity of the maximum frequency fmax.

In view of this, in the data recording system 1 a damping resistor RH with one end thereof grounded is connected to the output side of the record amplification circuit 2, and thereby the rise of the amplitude characteristic in the vicinity of the maximum frequency fmax is corrected as much as possible to provide a corrected frequency characteristic T1 (indicated by the dot-and-dash line in Figure 2).

In such a manner as this in the data recording system 1, information data DTREC which is usually sent at a data rate of 88 [Mbps] is recorded as record signals SREC with a maximum frequency fmax of 44 [MHz], and magnetized patterns which represent recording wavelength inversions at intervals of 0.9 [µm] as a minimum are formed on the recording tracks of the magnetic tape 5.

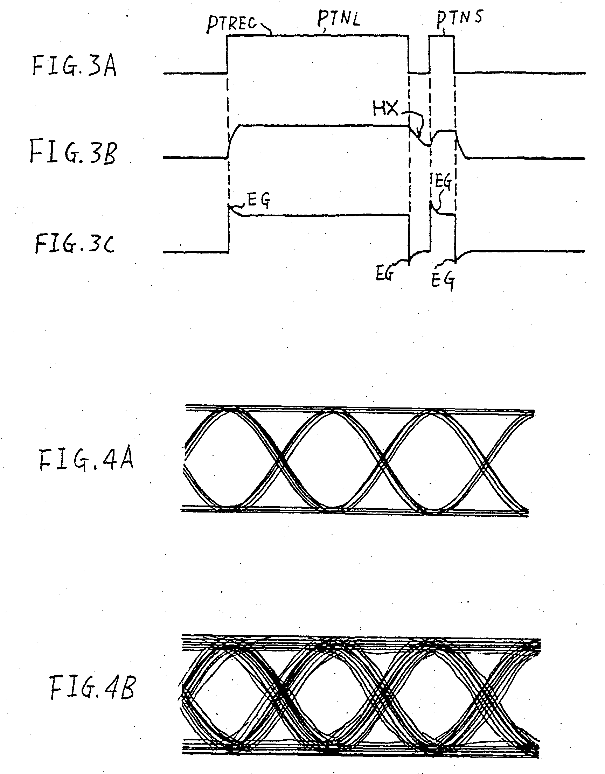

Here for example, when the information data DTREC, generating a shorter wave pattern PTNS after longer wave pattern PTNL, is recorded on the magnetic tape as shown in Figure 3A, the shorter wave pattern PTNS reduces in amplitude due to an occurrence of an interference wave form HX as shown in Figure 3B.

In view of this, when the information data DTREC is digital recorded on the magnetic tape the front edges of the record signal SREC are emphasized and/or the portion of the longer wave pattern of the record signal SREC are pulse wave modulated within the limits of a half of the minimum wavelength T prior to recording.

In practice, in the data recording apparatus, a front edge emphasizer not shown in Figure 1 is used to emphasize the front edge EG of the information data DTREC as shown in Figure 3C and to input it to the record amplification circuit 2 prior to recording. In such a data recording system 1, the relative speed of the head 4 to the recording tracks of the magnetic tape 5 is variably controlled to factors of 1/1, 1/2, 1/4, 1/8, 1/16, 1/24, etc by controlling the rotary speed of the head 4 and the travelling speed of the magnetic tape 5, and this enables magnetic patterns to be recorded at variable speeds on and reproduced from recording tracks with the minimum recording wavelength of 0.9 [µm].

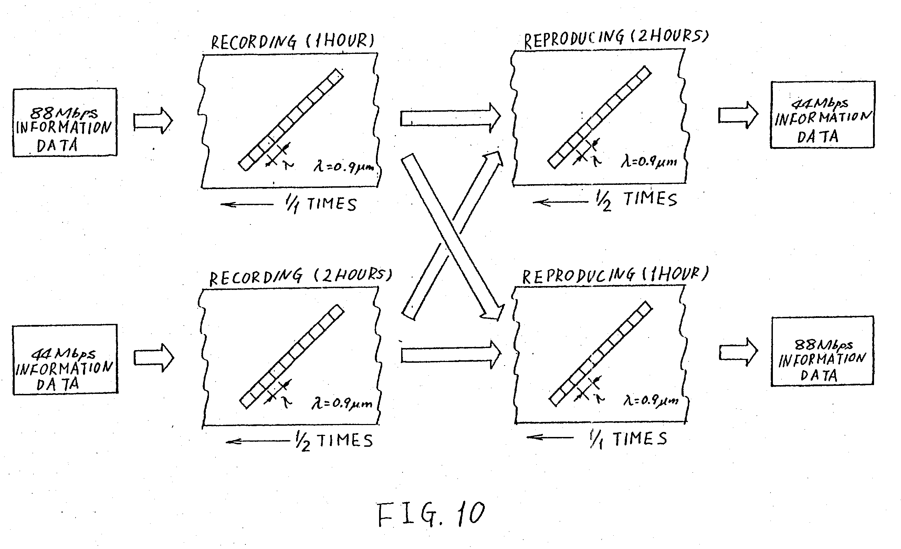

Referring to Figure 10, the relationship of the information data DTREC recorded on and reproduced from the recording tracks is illustrated. The information data DTREC which has been recorded at a data rate of 88 [Mbps], for example, can be read as information data with a data rate of 44 (22, 11, 5.50 or 2.25) [Mbps] by variably controlling the relative speed of the magnetic tape 5 to the head 4 with a factor of 1/2 (1/4, 1/8, 1/16 or 1/24); that is, a data rate with maximum frequency of 22 (11, 5.50, 2.25 or 1.25) [MHz]. This enables the information data DTREC to be reproduced at the lower speed with a factor of 1/2 (1/4, 1/8, 1/16 and 1/24).

On the other hand, the information data DTREC which has been recorded at a data rate of 44 [Mbps], for example, can be read as information data with a data rate of 88 [Mbps] by variably controlling the relative speed of the magnetic tape 5 to the head 4 to a factor of 1/1; that is, a data rate with maximum frequency fmax1 of 44 [MHz]. This enables the information data DTREC to be reproduced at a double high speed.

In this data recording system, which is capable of variable speed recording and reproducing, observed data, such as astronomical observation data, which slowly changes can be practically recorded at a data rate of 2.25 [Mbps], and can be reproduced at a data rate of 88 [Mbps]. This enables long hours of data to be analyzed within a short time.

On the other hand, observed data, measured data, etc which quickly change may be recorded at a data rate of 88 [Mbps] and reproduced at a data rate of 2.25 [Mbps]. This enables the data to be exactly analyzed at a lower speed. Thus, this data recording system may be used as a frequency conversion buffer of information data.

However, in the data recording system 1 of such a construction, the conventional recording system records record signals SREC, having a maximum frequency fmax (= 44 [Mhz]), with a frequency characteristic T1 as shown by the dot-and-dash line in Figure 2. In the case where record signals SREC with a maximum frequency fmax (= 22 [MHz]), for example, which is 1/2 times as large as the maximum frequency fmax (= 44 [MHz]), are to be recorded, recording is carried out with an ideal frequency characteristic T2 as shown by the two-dots-and-dash line in Figure 2.

When the frequency characteristic T1 for recording the information data DTREC at a data rate of 88 [Mbps] and the frequency characteristic T2 for recording the information data DTREC at a data rate of 44 [Mbps] are different, different magnetized patterns are produced even if the magnetized patterns are reproduced on the recording tracks with a recording wavelength 0.9 [µm] as a minimum. This difference can be observed by an eye pattern of the reproduction signal.

In Figure 4A, there is illustrated an eye pattern obtained from the reproduction signal to have been recorded as the information data with a data rate of 44 [Mbps] at a relative speed with a factor of 1/1 on the magnetic tape and to be reproduced as the information data with a data rate of 88 [Mbps] at a relative speed with a factor 1/1 from the magnetic tape. In Figure 4B, there is illustrated another eye pattern obtained from the reproduction signal to have been recorded as the information data with a data rate of 44 [Mbps] at a relative speed with a factor of 1/2 on the magnetic tape and to reproduce as the information data with a data rate of 88 [Mbps] at a relative speed with a factor of 1/1 from the magnetic tape. If magnetized patterns formed on the magnetic tape are the same, the eye pattern of Figure 4A is to be equal to the eye pattern of Figure 4B. However the eye pattern of Figure 4B is representative as being worse than the eye pattern of Figure 4A. This means that error rates of the reproduction signals are not able to be equal in the cases with different data rates.

As a result, it is not possible to keep compatibility of information data between different data rates.

Generally, in the data recording apparatus 1, a differential coefficient of the recording system and a front edge emphasizing circuit (not shown), disposed in front stage of the record amplification circuit 2, are set a value to record the record signal SREC on the tape as a signal at a data rate of 88 [Maps] with maximum frequency of 44 [MHz]. If, however, information data DTREC at a data rate of 44 [Mbps] or 22 [Mbps] for 1/2 or 1/4 times is recorded, the front edge of the information data DTREC is emphasized extremely.

In cases where the emphasizing degrees of the front edges of the information data DTREC are different with respect to the data rates thereof, the magnetized patterns at various data rates are not equal to each other, even if magnetized patterns are formed on recording tracks with a minimum record wavelength. As a result, it is not possible to keep compatibility of the information data between different data rates.

German Patent Application Publication DE-A-3 800 827 (which corresponds to United States Patent US-A-4 920 461) discloses a data recording apparatus according to the pre-characterising part of claim 1 hereof.

According to the present invention there is provided a data recording apparatus for recording information data on a magnetic recording medium with different data rates of said information data varying from a maximum to a minimum, in which a relative speed between the magnetic recording medium and a magnetic head is changed according to the data rate of said information data on recording said information data on said magnetic recording medium by said magnetic head, the data recording apparatus comprising:
a control means for generating a control signal according to the data rate of said information; and
a frequency characteristic processing means for processing said information data to cause a frequency characteristic of a recording signal produced from said information data to be a predetermined frequency characteristic according to said control signal;
characterised in that:
said frequency characteristic processing means comprises a frequency band limitation filter arrangement which causes the upper end of a frequency band of said recording signal to be limited according to the data rate as indicated by said control signal; and
the frequency characteristic of said frequency band limitation filter arrangement is such that it causes the respective recorded magnetized patterns for different data rates to be identical and to produce, upon reproduction, eye patterns which are identical to that for a magnetized pattern of information data recorded on said recording medium by a maximum frequency band limitation characteristic, even if said information data has data rates of the maximum to the minimum.

Embodiments of the invention described hereinbelow are able to provide a data recording apparatus which is capable of forming the same magnetized patterns on a magnetic record medium even in cases different in data rate: more specifically, they provide a data recording apparatus which is capable of forming the same eye patterns between those of Figure 4A and 4B even in cases where the data rate is different.

The embodiments of the invention are capable of keeping compatibility of information data between different data rates even in cases where the data rate is different.

Thus, the embodiments of the invention provide a data recording apparatus which records information data DTREC, with a given data rate, on a magnetic tape 5, including frequency characteristic processing means for obtaining the predetermined characteristic of the information data DTREC according to the data rate. The frequency characteristic processing means comprises frequency band limiting means and may also comprise a high frequency constituent emphasizing circuit. By obtaining the frequency characteristic of information data according to the applicable data rate, the data recording apparatus is capable of forming the same magnetic patterns on a magnetic record medium even for different data rates, and is capable of keeping compatibility of information data between different data rates.

Embodiments of the invention are described hereinafter, by way of example only, with reference to the accompanying drawings. in which:
Figure 1 is a schematic diagram of a previously proposed data recording system;
Figure 2 is a characteristic curve graph illustrating the frequency characteristic thereof;
Figures 3A to 3C are signal waveform charts showing wave interferences generated by recording patterns;
Figures 4A and 4B are signal waveform charts showing eye patterns of a reproduction signal;
Figure 5 is a schematic diagram of a first data recording apparatus, which is an embodiment of the invention;
Figure 6 is a characteristic curve graph illustrating the frequency characteristic thereof;
Figure 7 is a schematic diagram of a second data recording apparatus;
Figure 8 is a characteristic curve graph which illustrates the frequency characteristic thereof;
Figure 9 is a schematic diagram of a third data recording apparatus, which is an embodiment of the invention; and
Figure 10 is a schematic view illustrating the relationship of recording and reproducing information data.
The first to third data recording apparatuses mentioned above will now be described with reference to the accompanying drawings:

### (1) First Data Recording Apparatus (Embodiment of the Invention)

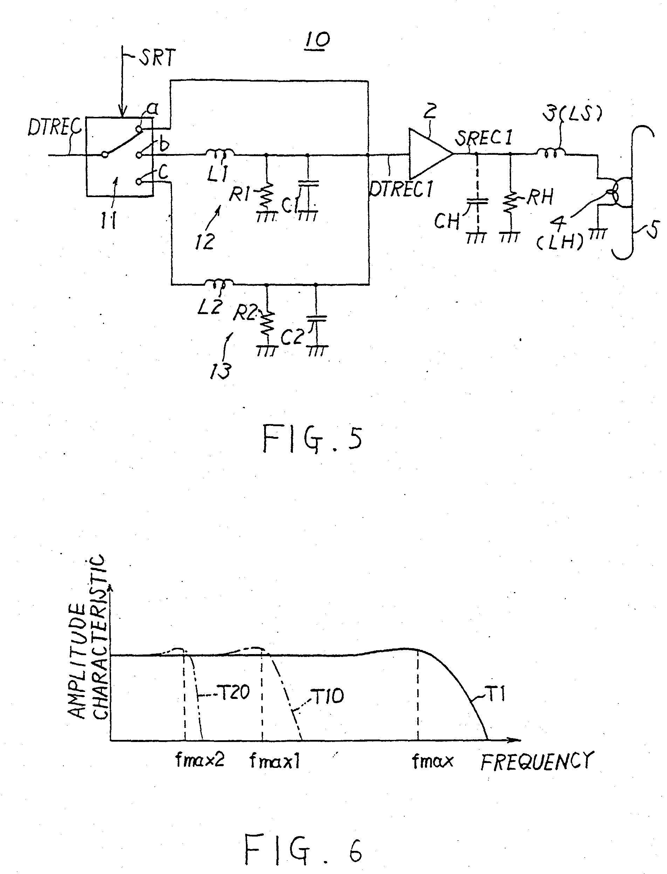

In Figure 5, in which parts corresponding to those of Figure 1 are indicated by the same reference numerals, information data DTREC is inputted to the input terminal of a switching circuit 11 of a data recording apparatus 10.

This switching circuit 11 has first, second and third output terminals a, b and c, and is controlled to switch in accordance with a rate signal SRT which corresponds to a data rate of information data DTREC. When first output terminal a is selected, information data DTREC is inputted as second information data DTREC1 to a record amplification circuit 2 without any change.

When the second or third output terminal b or c is selected in place of this terminal, the information data DTREC is limited in frequency band through band limitation circuit 12 or 13, and is then inputted as second information data DTREC1 to the record amplification circuit 2.

This first band limitation circuit 12 consists of a coil L1, a resistor R1 and a capacitor C1. The coil L1 is interconnected in series between the second output terminal b and the record amplification circuit 2 whereas each of the resistor R1 and capacitor C1 is grounded at one end thereof and is interconnected at the other end between the coil L1 and the record amplification circuit 2.

In practice, the coil L1, the resistor R1, and the capacitor C1 are selected to such values that they constitute a low-pass filter which has a resonance system at a maximum frequency fmax1 (= 22 [MHz]) which is a half of the maximum frequency fmax (= 44 [MHz]). As shown in Figure 6, this makes the apparatus have a frequency characteristic T10 (indicated by the dot-and-dash line in Figure 6) which is a half of the frequency characteristic T1 (shown by the solid line in Figure 6) in the frequency axis, the frequency characteristic T1 being exhibited when only the recording system adjacent to the record amplification circuit 2 is provided.

Similarly, the second band limitation circuit 13 consists of a coil L2, a resistor R2, and a capacitor C2. The coil L2 is interconnected in series between the third output terminal c and the record amplification circuit 2 whereas each of the resistor R2 and the capacitor C2 is grounded at one end thereof and interconnected between the coil L2 and the record amplification circuit 2.

Also, the coil L2, the resistor R2 and the capacitor C2 are selected to values such that they constitute a low-pass filter which has a resonance system at maximum frequency fmax2 (= 11 [MHz]), which is a quarter of the maximum frequency (= 44 [MHz]). As shown in Figure 6, this makes the system have a frequency characteristic T20 (indicated by the two-dots-and-dash line in Figure 6) which is a 1/4 of the frequency characteristic T1 in the frequency axis.

In the case where with such a construction, information data DTREC is recorded at a data rate of 88 [Mbps], for example, which corresponds to the maximum frequency of the recording system, the first output terminal a of the switching circuit 11 is selected by a rate signal SRT.

This causes the information data DTREC to be amplified as second information data DTREC1 by the record amplification circuit 2 without any change, and the resulting record signals SREC of the maximum frequency fmax (= 44 [MHz]) are fed to a head 4 through a rotary transformer 3.

In this event, the relative speed of the magnetic tape 5 to the head 4 in the direction of the recording tracks is set to a factor of 1/1, and thereby magnetized patterns corresponding to the frequency characteristic T1 with a record wavelength of 0.9 [µm] are formed on the recording tracks of the magnetic tape 5.

Alternatively, in the case where information data DTREC is recorded at a data rate of 44 [Mbps] which is a half of the data rate of 88 [Mbps], the second output terminal b of the switching circuit 11 is selected by the rate signal SRT.

This causes the information data DTREC to be limited in frequency band in the first band limitation circuit 12 according to the frequency characteristic T10, and is then amplified as second information data DTREC1 in the record amplification circuit 2. The resulting record signals SREC with maximum frequency fmax1 (= 22 [MHz]) are supplied to the head 4 through the rotary transformer 3.

In this event, the relative speed of the magnetic tape 5 to the head 4 in the direction of the recording tracks is set to a factor of 1/2, and thereby magnetic patterns corresponding to the frequency characteristic T10 with a record wavelength of 0.9 [µm] are formed on the recording tracks of the magnetic tape 5.

Alternatively, in the case where information data DTREC is recorded at a data rate of 22 [Mbps] which is 1/4 of the data rate of 88 [Mbps], the third output terminal c of the switching circuit 11 is selected by the rate signal SRT.

This causes the information data DTREC to be limited in frequency band in the second band limitation circuit 13 according to the frequency characteristic T20, and is then amplified as second information data DTREC1 in the record amplification circuit 2. The resulting record signals SREC with maximum frequency fmax2 (= 11 [MHz]) are supplied to the head 4 through the rotary transformer 3.

In this event, the relative speed of the magnetic tape 5 to the head 4 in the direction of the record track is set to a factor of 1/4, and thereby magnetized patterns corresponding to the frequency characteristic T20 with a record wavelength of 0.9 [µm] are formed on the recording tracks of the magnetic tape 5.

In this data recording apparatus 10, the switching circuit 11 is controlled to switch by the rate signal SRT according to the data rate of the information data DTREC, and thereby the used band of the information data DTREC is selected according to the data rate, selectively using the band limitation circuit 12 or 13. Even in the case of variable speed recording, the same magnetized patterns with the same frequency characteristic are produced on recording tracks of the magnetic tape 5.

In the foregoing construction, the used band of information data is limited by the selective use of the band limiting circuits according to a data rate, and this realizes a data recording system which is capable of producing the same magnetized patterns on a magnetic tape even for cases with different data rates.

In the first embodiment, there are provided band limitation circuits which are used for 1/2 and 1/4 times data rates of information data, respectively. However, in addition to these, band limitation circuits which are used for 1/8, 1/16 and 1/24 data rates may be provided, and this enables similar effects to those of the embodiment previously described to be provided even for different data rates 1/1, 1/2, 1/4, 1/8, 1/16, and 1/24.

In the case of selectively recording information data at data rates, variable components may be used for coils, resistors and capacitors of the band limitation circuits for controlling these components to correspond to data rates instead of the construction such that band limitation circuits with fixed rates are switch controlled. This much simplifies the overall configuration.

### (2) Second Data Recording Apparatus

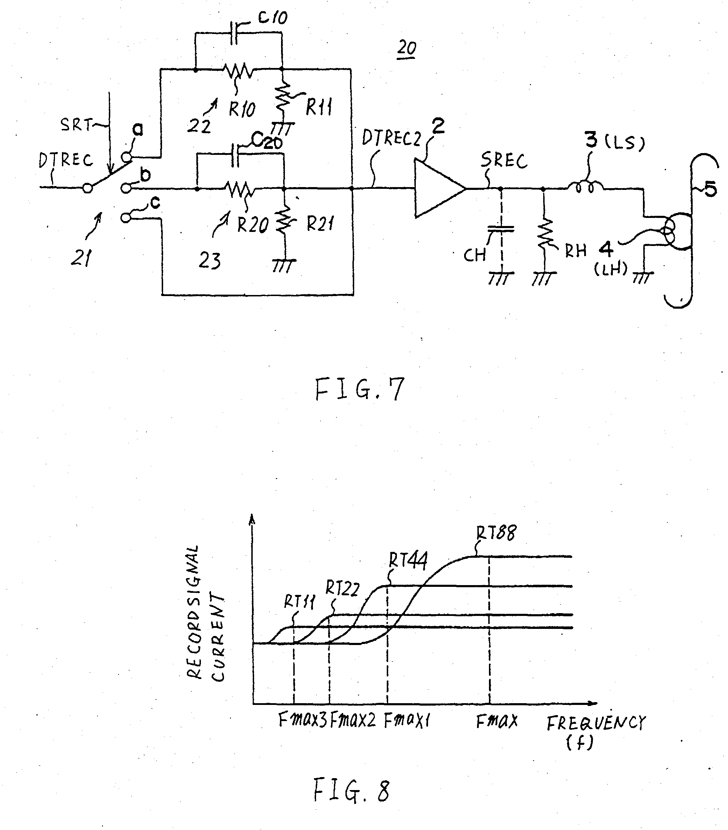

In Figure 7, in which parts corresponding to those of Figure 5 are indicated by the same reference numerals, information data DTREC is inputted to the input terminal of a switching circuit 21 of a data recording apparatus 20.

This switching circuit 21 has first, second and third output terminals a, b and c, and is controlled to switch by a rate signal SRT which corresponds to a data rate of information data DTREC. When third output terminal c is selected, the information data DTREC is inputted as third information data DTREC2 to recording amplification circuit 2 without any change.

When first or second output terminal a or b is selected, a front edge of information data is emphasized with predetermined amount through first or second front edge emphasizing circuit 22 or 23, and is then inputted as third information data DTREC2 to the recording amplification circuit 2.

This first front edge emphasizing circuit 22 consists of differential circuit. A resistor R10 and a capacitor C10 parallelly connected to each other, are connected in series between first output terminal a and the record amplification circuit 2. A resistor R11, grounded at one end thereof, is connected at the other end between the resistor R10 and the record amplification circuit 2.

The resistors R10, R11 and the capacitor C10 are selected to such values that a differential coefficient suitable for emphasizing a front edge of information data recorded at a data rate of 88 [Mbps] (ie with maximum frequency fmax of 44 [MHz]) is generated.

Similarly, the second front edge emphasizing circuit 23 generally comprises a differential circuit. A resistor R20 and a capacitor C20, parallelly connected to each other, are connected in series between the first output b and the record amplification circuit 2. A resistor R21, grounded at one end thereof, is connected at the other end between the resistor R20 and the record amplification circuit 2.

The resistors R20, R21 and the capacitor C20 are selected to such values that a differential coefficient suitable for emphasizing a front edge of information data recorded at a data rate of 44 [Mbps] (ie with maximum frequency fmax of 22 [MHz]) is generated.

From experience, an interference wave form HX (in Figure 3B) to be generated when the information data DTREC is digital recorded on a magnetic tape 5 is related to a magnetic inductivity (permeability) µ of the magnetic head 4 and a magnetic characteristic of the magnetic tape 5 as a recording medium. The higher the magnetic inductivity of magnetic head, the smaller the interference between wave forms is in the cases where the magnetic tapes used are the same.

It also confirmed that actually the magnetic inductivity µ has a frequency characteristic as illustrated by graphs RT88, RT44, RT22 and RT11 in Figure 8 corresponding to data rates of 88, 44, 22 and 11 [Mbps].

Therefore, the lower the frequency of the recording signal SREC provided to the magnetic head 4, the smaller the interference between wave forms is in cases where the magnetic tape 5 and the magnetic head 4 used are the same. Thus the amount of emphasizing for the front edge of the information data may be limited.

On the basis of this principle, in the second data recording apparatus, first and second front edge emphasizing circuits emphasize the front edge of the information data DTREC with amount of emphasizing at data rates of 88 and 44 [Mbps]. When the data rate of the information data DTREC is 88 or 44 [Mbps], the front edge of the information data DTREC is emphasized through the first or second front edge emphasizing circuit and is inputted to the recording amplification circuit 2.

When the data rate of the information data DTREC is lower than 22 [Mbps], the information data DTREC is inputted to the record amplification circuit without any emphasizing of the front edge thereof.

With a construction such that the information data DTREC is recorded at the data rate of 88 [Mbps], for example, the first output terminal a of the switching circuit 11 is selected bya rate signal SRT.

This causes the front edge of the information to be emphasized in the first front edge emphasizing circuit 22, the output signal thereof being amplified by the record amplification circuit 2 as a third information data DTREC2, and the resulting record signal SREC of the maximum frequency fmax (= 44 [MHz]) being fed to a head 4 through a rotary transformer 3.

In this event, the relative speed of the magnetic tape 5 to the head 4 in the direction of the recording tracks is set to a factor 1/1, and thereby magnetized patterns with a minimum record wavelength of 0.9 [µm] are formed on the recording tracks of the magnetic tape 5.

Alternatively, in the case where the information data DTREC is recorded at the data rate of 44 [Mbps], the second output terminal b of the switching circuit 21 is selected by the rate signal SRT.

This causes the front edge of the information data DTREC to be emphasized in the second front edge emphasizing circuit 23, the output signal thereof being amplified as the third information data DTREC2 by the record amplification circuit 2, and the resulting record signal SREC with the maximum frequency fmax1 of 22 [MHz] being fed the head 4 through the rotary transformer 3.

In this event, the relative speed of the magnetic tape 5 to the head 4 in the direction of the recording tracks is set to a factor 1/2, and thereby the magnetized patterns with the maximum record wavelength of 0.9 [µm] are formed on the recording tracks of the magnetic tape 5.

Alternatively, in the case where the information data DTREC is recorded at the data rate of 22 [Mbps], the third output terminal c of the switching circuit 21 is selected by the rate signal SRT.

This causes the information data DTREC to be amplified as the third information data DTREC2 in the record amplification circuit 2, the resulting record signal SREC with the maximum frequency fmax2 of 11 [MHz] being fed to the head 4 through the rotary transformer 3.

In this event, the relative speed of the magnetic tape 5 to head 4 in the direction of the recording tracks is set to a factor of 1/4, and thereby the magnetized patterns with the minimum record wavelength of 0.9 [µm] is formed on the recording tracks of the magnetic tape 5.

In the foregoing cpnstruction, the front edge of the information data DTREC is emphasized by the selective use of the front edge emphasizing circuit by the rate signal according to the data rates with the amount of the emphasizing according to the data rates. Thus a data recording system is realized which is capable of producing the same magnetized patterns on the magnetic tape 5 even for the cases with different data rates.

### (3) Third Data Recording Apparatus (Embodiment of the Invention)

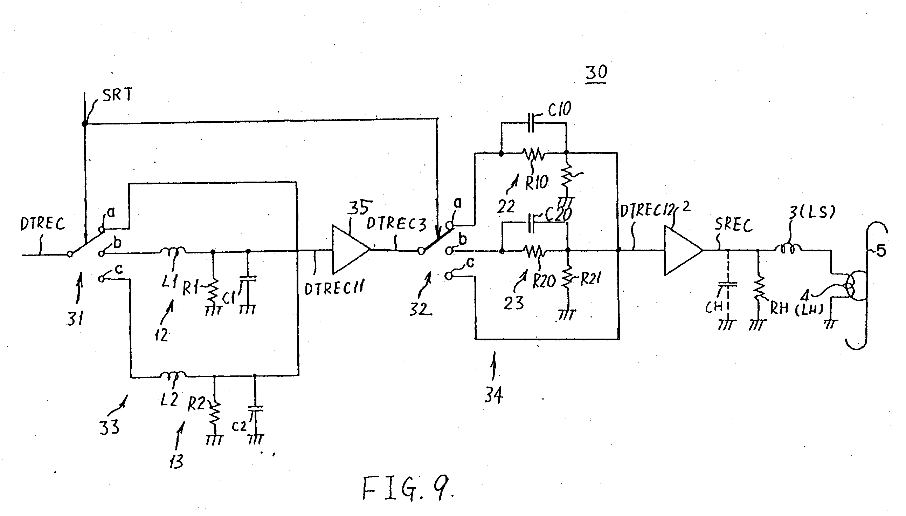

In Figure 9, in which parts corresponding to those of Figures 5 and 7 are indicated by the same reference numerals, a data recording apparatus 30 is illustrated. The circuit construction is similar to a circuit construction in which the edge emphasizing circuit portion of the second data recording apparatus is connected in series to the band limitation circuit portion of the first data recording apparatus. Switching circuits 31 and 32 are controlled by a rate signal SRT according to the data rates of the information data DTREC so as to be switched among output terminals a, b and c synchronously. The operations of the band limitation circuit portion 33 and the edge emphasizing circuit portion 34 controlled by the rate signal SRT are identical with operations described above about the first and second data recording apparatuses respectively.

The information data DTREC is band limited in the band limitation circuit portion 33 according to the data rates thereof to be fed to a buffer amplification circuit 33 as the information data DIREC1.

The thus band limited information data DTREC11 obtained at the output of the buffer amplification circuit 35 is edge emphasized in the edge emphasizing circuit portion 34 according to the data rates thereof to be fed to the record amplification circuit 2 as the information data DTREC12. This causes the magnetized patterns formed on the magnetic tape to be identical to each other even with different data rates of the information data DTREC.

### (4) Other embodiment

Although in the embodiment of Figure 5 it is stated that the present invention is applied to the data recording system which records observation data and measurement data, for example, the present invention is not limited to this. The present invention is suitably applied to various data recording systems which are capable of recording video signals and audio signals on magnetic tapes, magnetic discs, etc provided they are capable of performing variable recording of information data.

Although in the embodiment of Figure 9, there are provided front edge emphasizing circuits which are composed by the differential circuit and emphasize the front edge of the information data to emphasize the constituents with higher frequencies, the present invention is not limited to this. The constituents with higher frequencies of information data may be emphasized by a circuit means, for example, digital filters etc. In this event, the digital filters etc with different frequency characteristics may be used according to the data rates.

In the embodiment of Figure 9, there are provided front edge emphasizing circuits which are used for 1/1 and 1/2 times data rates of the information data respectively. However, in addition to those, front edge emphasizing circuits which are used for 1/4, 1/8, 1/16, 1/24 times data rates respectively may be provided, and this enables similar effects to those of the embodiment previously described to be provided even for different data rates 1/8, 1/16 and 1/24.

In the case of selectively recording information data at plural data rates, variable components may be used for resistors and capacitors of front edge emphasizing circuits for controlling values of these components corresponding to data rates instead of the construction such that front edge emphasizing circuit with fixed constants are switch controlled. This much simplifies the overall configuration.

## Claims

1. A data recording apparatus for recording information data on a magnetic recording medium (5) with different data rates of said information data varying from a maximum to a minimum, in which a relative speed between the magnetic recording medium and a magnetic head (4) is changed according to the data rate of said information data on recording said information data on said magnetic recording medium by said magnetic head, the data recording apparatus comprising:
a control means for generating a control signal (SRT) according to the data rate of said information; and
a frequency characteristic processing means for processing said information data to cause a frequency characteristic of a recording signal (SREC) produced from said information data to be a predetermined frequency characteristic according to said control signal;
characterised in that:
said frequency characteristic processing means comprises a frequency band limitation filter arrangement (11, 12, 13; 31, 12, 13) which causes the upper end of a frequency band of said recording signal (SREC) to be limited according to the data rate as indicated by said control signal (SRT); and
the frequency characteristic of said frequency band limitation filter arrangement (11, 12, 13; 31, 12, 13) is such that it causes the respective recorded 'magnetized patterns for different data rates to be identical and to produce, upon reproduction, eye patterns which are identical to that for a magnetized pattern of information data recorded on said recording medium by a maximum frequency band limitation characteristic, even if said information data has data rates of the maximum to the minimum.

2. A data recording apparatus according to claim 1, in which said frequency characteristic processing means comprises a higher frequency band emphasizing circuit (32, 34) which emphasizes higher frequency constituents of said recording signal (SREC) according to said control signal (SRT), and said higher frequency band emphasizing circuit (32, 34) has a characteristic according to which, the higher the data rate of said information data, the stronger the rate of the emphasizing.

3. A data recording apparatus according to claim 2, in which said higher frequency emphasizing circuit (32, 34) comprises an edge emphasizing circuit (34) in which a signal waveform is emphasized by a differential circuit.

## Patentansprüche

1. Datenaufzeichnungsgerät zum Aufzeichnen von Informationsdaten auf einem Magnetaufzeichnungsträger (5) mit verschiedenen Datenraten der Informationsdaten, die von einem Maximum bis zu einem Minimum schwanken, bei dem eine Relativgeschwindigkeit zwischen dem Magnetaufzeichnungsträger und einem Magnetkopf (4) gemäß der Datenrate der Informationsdaten beim Aufzeichnen der Informationsdaten auf dem Magnetaufzeichnungsträger durch den Magnetkopf geändert wird, wobei das Aufzeichnungsgerät aufweist:
eine Steuereinrichtung zum Erzeugen eines Steuersignals (SRT) gemäß der Datenrate der Information; und
eine Frequenzkennlinienverarbeitungseinrichtung zum Verarbeiten der Informationsdaten, um zu bewirken, daß eine Frequenzkennlinie eines Aufzeichnungssignals (SREC), welches aus den Informationsdaten erzeugt wird, eine vorgegebene Frequenzkennlinie gemäß dem Steuersignal hat;
dadurch gekennzeichnet, daß
die Frequenzkennlinienverarbeitungseinrichtung eine Frequenzbandbegrenzungsfilteranordnung (11, 12, 13; 31, 12, 13) umfaßt, die bewirkt, daß das obere Ende eines Frequenzbandes des Aufzeichnungssignals (SREC) gemäß der Datenrate begrenzt wird, wie durch das Steuersignal (SRT) angezeigt wird; und
die Frequenzkennlinie der Frequenzbandbegrenzungsfilteranordnung (11, 12, 13; 31, 12, 13) so ist, daß sie bewirkt, daß die entsprechenden aufgezeichneten Magnetisierungsmuster für unterschiedliche Datenraten identisch sind, und bei der Reproduktion Augenmuster erzeugt, die identisch sind demjenigen für ein Magnetisierungsmuster von Informationsdaten, die auf dem Aufzeichnungsträger aufgezeichnet sind, durch eine maximale Frequenzbandbegrenzungskennlinie, sogar, wenn die Informationsdaten Datenraten vom Maximum zum Minimum haben.

2. Datenaufzeichnungsgerät nach Anspruch 1, bei dem die Frequenzkennlinienverarbeitungseinrichtung eine Höher-Frequenzband-Anhebungsschaltung (32, 34) aufweist, die höhere Frequenzbestandteile des Aufzeichnungssignals (SREC) gemäß dem Steuersignal (SRT) anhebt, und die Höher-Frequenzband-Anhebungsschaltung (32, 34) eine Kennlinie hat, gemäß der die Rate der Anhebung um so stärker wird, je höher die Datenrate der Informationsdaten ist.

3. Datenaufzeichnungsgerät nach Anspruch 2, bei dem die Höher-Frequenz-Anhebungsschaltung (32, 34) eine Flankenanhebungsschaltung (34) umfaßt, in welcher eine Signalschwingungsform durch eine Differentialschaltung angehoben wird.

## Revendications

1. Appareil d'enregistrement de données pour enregistrer des données d'information sur un support magnétique d'enregistrement (5) à différents débits de données desdites données d'information variant d'un maximum à un minimum, dans lequel la vitesse relative entre le support magnétique d'enregistrement et une tête magnétique (4) est changée selon le débit de données desdites données d'information lors d'un enregistrement desdites données d'information sur ledit support magnétique d'enregistrement par ladite tête magnétique, l'appareil d'enregistrement de données comprenant :
un moyen de commande pour engendrer un signal de commande (SRT) selon le débit de données desdites informations ; et,
un moyen de traitement de caractéristique de fréquence pour traiter lesdites données d'information afin de faire en sorte que la caractéristique de fréquence d'un signal d'enregistrement (SREC) produit à partir desdites données d'information soit une caractéristique de fréquence prédéterminée selon ledit signal de commande ;
caractérisé en ce que :
ledit moyen de traitement de caractéristique de fréquence comprend un dispositif de filtre de limitation de bande de fréquences (11, 12, 13 ; 31, 12, 13) qui fait en sorte que l'extrémité du haut d'une bande de fréquences dudit signal d'enregistrement (SREC) soit limitée selon le débit de données tel qu'indiqué par ledit signal de commande (SRT) ; et,
la caractéristique de fréquence dudit dispositif de filtre de limitation de bande de fréquences (11, 12, 13 ; 31, 12, 13) est telle qu'elle rend identiques les configurations magnétisées enregistrées respectives pour différents débits de données et leur fait produire, lors d'une reproduction, des diagrammes en oeil qui sont identiques à ceux pour une configuration magnétisée de données d'information enregistrées sur ledit support d'enregistrement par une caractéristique de limitation de bande de fréquences maximales, même si lesdites données d'information ont des débits de données du maximum au minimum.

2. Appareil d'enregistrement de données selon la revendication 1, dans lequel ledit moyen de traitement de caractéristique de fréquence comprend un circuit d'accentuation de bande de plus hautes fréquences (32, 34) qui accentue les composantes de plus hautes fréquences dudit signal d'enregistrement (SREC) selon ledit signal de commande (SRT), et ledit circuit d'accentuation de bande de plus hautes fréquences (32, 34) a une caractéristique selon laquelle, plus le débit de données desdites données d'information est élevé, plus le taux d'accentuation est fort.

3. Appareil d'enregistrement de données selon la revendication 2, dans lequel ledit circuit d'accentuation aux plus hautes fréquences (32, 34) comprend un circuit d'accentuation de front (34) dans lequel la forme d'onde d'un signal est accentuée par un circuit différentiel.
